# DEMANDE DE BREVET EUROPEEN

(11) **EP 4 799 926 A1**
(43) Date de publication de la demande: **02.09.2026**
(21) Numéro de dépôt: 26160445.8
(22) Date de dépôt: 24.02.2026
(51) Int. Cl.: B64C 11/32, B64C 11/34, B64C 11/38, B64C 11/40, B64C 11/30

(54) **PROCÉDÉ ET DISPOSITIF AVIONIQUE DE CONTRÔLE D'ANGLE DE CALAGE D'UNE SOUFFLANTE OU D'UNE HÉLICE D'UN GROUPE MOTOPROPULSEUR D'AERONEF**

(30) Priorité: 27.02.2025 FR 2501991
(71) Demandeur: Airbus Operations (S.A.S.), 31060 Toulouse Cedex 9 (FR)
(72) Inventeur: BRUNEL, Loïc, 31060 TOULOUSE (FR); BOYER, David, 31060 TOULOUSE (FR); FLAMANT-BATI, Quentin-Alexandre, 31060 TOULOUSE (FR); PILON, Nicolas, 31060 TOULOUSE (FR); NECCI, Carlo, 31060 TOULOUSE (FR); MARRAST, Laetitia, 31060 TOULOUSE (FR)
(74) Mandataire: Cabinet Le Guen Maillet

(57) **Abrégé**

L'invention concerne un procédé de contrôle (S4) d'un angle de calage d'une soufflante ou d'une hélice d'un groupe motopropulseur d'aéronef visant à opérer une mise en drapeau de ladite soufflante ou de l'hélice lorsqu'une incohérence dudit angle de calage est détectée (S3). L'invention concerne en outre un dispositif avionique configuré pour mettre en œuvre le procédé.

Avantageusement, il est ainsi possible de limiter les risques d'effets aérodynamiques indésirables en cas de dysfonctionnement de la commande d'angle de calage.

## Description

### DOMAINE TECHNIQUE

La présente invention concerne un procédé et un dispositif pour vérifier la cohérence d'un angle de calage des pales d'une soufflante ou d'une hélice d'un groupe motopropulseur d'aéronef, et opérer un contrôle d'angle de calage des pales du groupe motopropulseur si un défaut d'angle de calage est détecté.

### ÉTAT DE LA TECHNIQUE ANTÉRIEURE

Des groupes motopropulseurs d'aéronef comprennent des soufflantes ou des hélices à pas variable, ce qui permet de contrôler la poussée développée par un groupe motopropulseur par action sur l'angle de calage des pales. Chaque groupe motopropulseur d'avion est contrôlé par un dispositif de contrôle qui lui est propre, lequel dispositif de contrôle est relié à un dispositif avionique de contrôle, par exemple de type calculateur IMA (acronyme de l'anglais et qui signifie « *Integrated Modular Avionic* ») implémentant des fonctions liées à la propulsion de l'aéronef qui l'embarque. Le dispositif de contrôle du groupe motopropulseur régule la poussée générée par le groupe motopropulseur en fonction d'ordres reçus depuis le dispositif avionique de contrôle, et en particulier, il contrôle l'angle de calage des pales de la soufflante ou de l'hélice.

Des configurations de pales de soufflante ou d'hélice ne sont pas acceptables dans certaines conditions de vol, du fait de l'altitude et de la vitesse d'évolution de l'aéronef concerné, car elles peuvent entraîner des effets aérodynamiques indésirables pour le vol de l'aéronef. Ainsi, un angle de calage peut devenir trop faible pour garantir des bonnes conditions de vol de l'aéronef, pour certaines combinaisons d'altitude et de vitesse. Ce peut être le cas en cas de dysfonctionnement du système de contrôle de l'angle de calage des pales d'une soufflante ou d'une hélice.

La situation peut être améliorée.

### EXPOSÉ DE L'INVENTION

Un objet de la présente invention est de proposer un procédé de contrôle d'un angle de calage des pales d'une soufflante ou d'une hélice d'un groupe motopropulseur d'un aéronef, le procédé étant exécuté dans un dispositif avionique de l'aéronef, le dispositif avionique étant embarqué à bord de l'aéronef, indépendant du groupe motopropulseur et relié à un dispositif de contrôle du groupe motopropulseur entrainant la soufflante, ou l'hélice, le dispositif de contrôle étant compris dans le groupe motopropulseur, le procédé comprenant :
- obtenir des premières informations représentatives de conditions de vol de l'aéronef, par rapport à son environnement extérieur, fournies par au moins un calculateur avionique de l'aéronef indépendant du groupe motopropulseur, ces premières informations comprenant au moins une altitude et une vitesse dans l'air de l'aéronef,
le procédé étant tel qu'il comprend en outre :
- déterminer une valeur seuil d'angle de calage des pales de la soufflante ou de l'hélice, à partir des premières informations, de façon à limiter les risques d'effets aérodynamiques indésirables pour le vol de l'aéronef lorsque l'aéronef vole à ladite altitude avec ladite vitesse dans l'air,
- obtenir une information représentative d'un angle de calage courant des pales de la soufflante ou de l'hélice, puis,
- envoyer un ordre de contrôle du groupe motopropulseur lorsque l'information représentative de l'angle de calage courant est inférieure à la valeur seuil, l'ordre de contrôle visant à opérer une mise en drapeau de la soufflante ou de l'hélice du groupe motopropulseur de l'aéronef.

Il est ainsi possible de limiter les risques d'effets aérodynamiques indésirables pour le vol de l'aéronef en cas de dysfonctionnement de la commande d'angle de calage. Le procédé est d'autant plus avantageux que l'ordre de mise en drapeau est mis en œuvre par le dispositif avionique, indépendamment du groupe motopropulseur et de son dispositif de contrôle, en fonction desdites informations représentatives de conditions de vol de l'aéronef par rapport à son environnement extérieur.

Selon un mode de réalisation, l'ordre de contrôle du groupe motopropulseur est un signal de contrôle envoyé au dispositif de contrôle du groupe motopropulseur, de façon à opérer la mise en drapeau de la soufflante ou de l'hélice sous contrôle du dispositif de contrôle du groupe motopropulseur.

Selon un mode de réalisation, l'ordre de contrôle du groupe motopropulseur est un signal de contrôle de coupure d'alimentation en carburant du groupe motopropulseur envoyé pour commander la fermeture d'une vanne montée en série sur une ligne d'alimentation en carburant du groupe motopropulseur ou un signal de contrôle de coupure d'alimentation électrique du dispositif de contrôle du groupe motopropulseur envoyé pour commander l'ouverture d'un contacteur électrique monté en série sur une ligne d'alimentation électrique du dispositif de contrôle du groupe motopropulseur.

Selon un mode de réalisation, le dispositif avionique étant relié à des dispositifs de contrôle d'au moins deux groupes motopropulseurs de l'aéronef, le dispositif avionique est configuré pour superviser le contrôle d'angle de calage des pales de soufflantes ou d'hélices desdits au moins deux groupes motopropulseurs et pour ne pas commander simultanément la mise en drapeau des soufflantes ou des hélices de tous les groupes motopropulseurs de l'aéronef.

Un autre objet de l'invention est un dispositif avionique de contrôle d'un angle de calage des pales d'une soufflante ou d'une hélice d'un groupe motopropulseur d'un aéronef, le dispositif avionique de contrôle étant prévu pour être embarqué à bord de l'aéronef, indépendant du groupe motopropulseur et comprenant de la circuiterie électronique configurée pour :
- obtenir des premières informations représentatives de conditions de vol de l'aéronef par rapport à son environnement extérieur, fournies par au moins un calculateur avionique de l'aéronef indépendant du groupe motopropulseur, ces premières informations comprenant au moins une altitude et une vitesse dans l'air de l'aéronef,
la circuiterie électronique du dispositif avionique de contrôle d'un angle de calage est en outre configuré pour :
- déterminer une valeur seuil d'angle de calage des pales de la soufflante ou de l'hélice, à partir des premières informations, de façon à limiter les risques d'effets aérodynamiques indésirables pour le vol de l'aéronef lorsque l'aéronef vole à ladite altitude avec ladite vitesse dans l'air,
- obtenir une information représentative d'un angle de calage courant des pales de la soufflante ou de l'hélice, puis,
- envoyer un ordre de contrôle du groupe motopropulseur lorsque l'information représentative de l'angle de calage courant est inférieure à la valeur seuil, l'ordre de contrôle visant à opérer une mise en drapeau de la soufflante ou de l'hélice du groupe motopropulseur de l'aéronef.

Selon un mode de réalisation, la circuiterie électronique du dispositif avionique de contrôle d'un angle de calage est en outre configurée pour envoyer l'ordre de contrôle du groupe motopropulseur sous la forme d'un signal de contrôle envoyé à un dispositif de contrôle du groupe motopropulseur, compris dans le groupe motopropulseur, de façon à opérer la mise en drapeau de la soufflante ou de l'hélice du groupe motopropulseur d'aéronef sous contrôle du dispositif de contrôle du groupe motopropulseur.

Selon un mode de réalisation, la circuiterie électronique du dispositif avionique de contrôle d'un angle de calage est en outre configurée pour envoyer l'ordre de contrôle du groupe motopropulseur sous la forme d'un signal de contrôle de coupure d'alimentation en carburant du groupe motopropulseur envoyé pour commander la fermeture d'une vanne montée en série sur une ligne d'alimentation en carburant du groupe motopropulseur ou un signal de coupure d'alimentation électrique du dispositif de contrôle du groupe motopropulseur envoyé pour commander l'ouverture d'un contacteur électrique monté en série sur une ligne d'alimentation électrique du dispositif de contrôle du groupe motopropulseur.

Selon un mode de réalisation, la circuiterie électronique du dispositif avionique de contrôle d'un angle de calage est configurée pour superviser le contrôle d'angle de calage des pales de soufflantes ou d'hélices d'au moins deux groupes motopropulseurs de l'aéronef et pour ne pas commander simultanément la mise en drapeau des soufflantes ou des hélices de tous les groupes motopropulseurs de l'aéronef.

L'invention a également pour objet un aéronef comprenant un dispositif avionique de contrôle d'un angle de calage tel que décrit ci-avant.

L'invention concerne de plus un produit programme d'ordinateur comprenant des instructions de codes de programme pour exécuter les étapes d'un procédé tel que précédemment décrit lorsque ce programme est exécuté par un processeur d'un dispositif avionique, ainsi qu'un support de stockage comprenant un produit programme d'ordinateur tel que précité.

### BRÈVE DESCRIPTION DES DESSINS

La figure 1 illustre schématiquement un système de contrôle de l'angle de calage des pales d'une soufflante d'aéronef selon un mode de réalisation ;
La figure 2 est un ordinogramme illustrant des étapes d'un procédé de contrôle de l'angle de calage des pales d'une soufflante d'aéronef selon un mode de réalisation ;
La figure 3 illustre un aéronef comprenant un dispositif avionique selon un mode de réalisation ; et,
La figure 4 illustre un exemple d'architecture interne d'un dispositif avionique configuré pour exécuter le procédé illustré sur la figure 2.

### EXPOSÉ DÉTAILLÉ DE MODES DE RÉALISATION

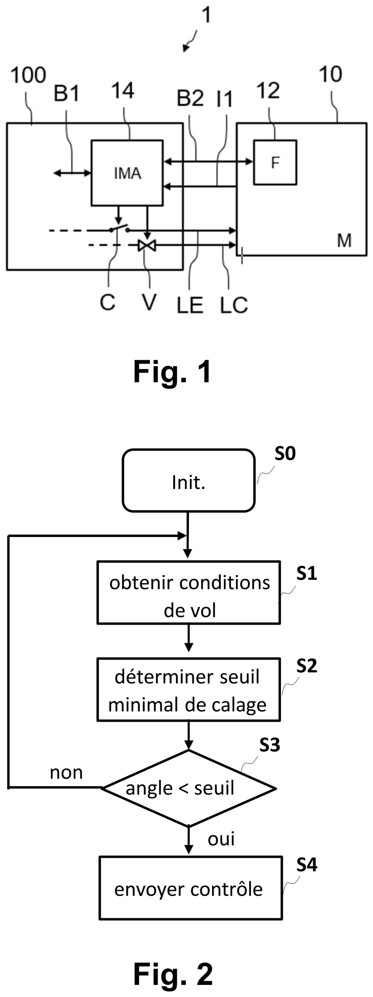

La **figure** 1 représente schématiquement un système de contrôle 1 de l'angle de calage des pales d'une soufflante d'un groupe motopropulseur M 10 d'un aéronef 100. Le système de contrôle 1 est installé à bord de l'aéronef 100. Le système de contrôle 1 comprend un dispositif avionique de contrôle 14. Le système de contrôle 1 ainsi que le dispositif avionique de contrôle 14 sont indépendants du groupe motopropulseur 10. Selon un mode de réalisation, le groupe motopropulseur 10 est un groupe motopropulseur de type turboréacteur qui comprend une soufflante. De façon connue, le groupe motopropulseur 10 est monté solidaire de l'aéronef 100. Le groupe motopropulseur 10 comprend un dispositif de contrôle F 12 dédié à un ensemble de fonctions de contrôle du groupe motopropulseur 10 et nommé ici « dispositif de contrôle du groupe motopropulseur ». Selon un mode de réalisation, le dispositif de contrôle 12 du groupe motopropulseur 10 est un dispositif de type FADEC, de l'acronyme anglais et qui signifie « *Full Authority Digital Engine Control* ». Le dispositif avionique de contrôle 14 est relié au dispositif de contrôle 12 du groupe motopropulseur.

Le dispositif de contrôle 12 du groupe motopropulseur est configuré pour assurer, parmi l'ensemble des fonctions de contrôle du groupe motopropulseur 10, un contrôle de l'angle de calage des pales de la soufflante du groupe motopropulseur 10. L'angle de calage étant ici un angle d'orientation des pales de la soufflante, par rapport au plan de rotation de la soufflante, lequel plan est perpendiculaire à l'axe de rotation de la soufflante. Plus précisément, l'angle de calage des pales de la soufflante est un angle entre une corde de référence du profil des pales de la soufflante et le plan de rotation de la soufflante. Selon un mode de réalisation, la corde de référence peut être la corde du profil d'une pale en son milieu (au milieu de la pale prise dans sa longueur). Selon des variantes, la corde de référence est la corde du profil de pales en un autre point des pales. Le dispositif de contrôle 12 du groupe motopropulseur 10 est quant à lui contrôlé et supervisé par le dispositif avionique de contrôle 14, par exemple de type IMA. Pour ce faire, le dispositif de contrôle 12 du groupe motopropulseur est relié au dispositif avionique de contrôle 14 via un ensemble de connexions portant des signaux unidirectionnels et bidirectionnels, considéré ici globalement comme un bus de communication B2. Le dispositif avionique de contrôle 14 est quant à lui relié à des systèmes tiers de l'aéronef, comprenant par exemple des capteurs, actionneurs et modules de contrôle et de pilotage de l'aéronef tels que des calculateurs avioniques de l'aéronef, via un bus de communication B1 qui comprend (ou porte) de nombreux signaux unidirectionnels et bidirectionnels. Lesdits capteurs, actionneurs et modules de contrôle et de pilotage de l'aéronef sont indépendants du groupe motopropulseur 10. Lesdits modules de contrôle et de pilotage de l'aéronef, tels que des calculateurs avioniques de l'aéronef, sont notamment configurés pour acquérir des informations issues desdits capteurs et pour déterminer en conséquence des informations représentatives de conditions de vol de l'aéronef par rapport à son environnement extérieur.

De plus, le dispositif de contrôle 12 du groupe motopropulseur 10 est alimenté électriquement par au moins une ligne d'alimentation électrique LE issue de l'aéronef 100. Le groupe motopropulseur 10 est alimenté en carburant par au moins une ligne d'alimentation en carburant LC issue de l'aéronef 100.

Selon un mode de réalisation, le groupe motopropulseur 10 est configuré pour délivrer au dispositif avionique de contrôle 14 un signal, I1, représentatif de l'angle de calage courant des pales de la soufflante du groupe motopropulseur 10. Selon une première alternative, le signal I1 est issu du dispositif de contrôle 12 du groupe motopropulseur. Selon une autre alternative, le signal I1 est directement issu d'un capteur délivrant un signal représentatif de l'angle de calage des pales de la soufflante.

La **figure 2** est un ordinogramme illustrant un procédé de contrôle d'angle de calage des pales de la soufflante du groupe motopropulseur 10 selon un mode de réalisation de l'invention. Une première étape **S0** est une étape d'initialisation au terme de laquelle tous les circuits, dispositifs et systèmes de l'aéronef utiles au fonctionnement de l'aéronef sont alimentés en énergie, initialisés et configurés pour opérer un vol de l'aéronef qui embarque le système de contrôle 1 de l'angle de calage des pales d'une soufflante. Lors d'une étape S1, l'aéronef évoluant dans une phase de décollage, de vol en montée, croisière ou descente, ou encore en phase d'atterrissage, le dispositif avionique de contrôle 14 reçoit de façon régulière et itérative une pluralité d'informations représentatives de conditions de vol de l'aéronef par rapport à son environnement extérieur. Selon un mode de réalisation, ces informations représentatives de conditions de vol de l'aéronef par rapport à son environnement extérieur comprennent la vitesse air courante de l'aéronef, la vitesse sol courante de l'aéronef, l'altitude courante de l'aéronef par rapport à un niveau de référence (par exemple la surface de la mer), la température courante de l'air, la pression atmosphérique courante au niveau de la mer, la pression atmosphérique locale courante, la force et la direction courantes du vent, l'hygrométrie courante, etc. Ces exemples ne sont pas limitatifs. Lors d'une étape **S2,** le dispositif avionique de contrôle 14 détermine, à partir d'au moins une vitesse de l'aéronef et une altitude de l'aéronef, une valeur seuil représentative d'un angle de calage minimal en deçà duquel les pales de la soufflante ne doivent pas être configurées et en deçà duquel il convient alors de configurer en drapeau les pales de la soufflante, c'est-à-dire selon un angle entrainant une trainée aérodynamique minimale ou selon une position de référence des pales considérée comme une configuration en drapeau de la soufflante. Cet angle de calage minimal est déterminé de façon à limiter les risques d'effets aérodynamiques indésirables pour le vol de l'aéronef lorsque l'aéronef vole à ladite altitude avec ladite vitesse dans l'air, les pales de la soufflante étant configurées avec cet angle de calage minimal. Selon un mode de réalisation, cette valeur seuil d'angle de calage des pales de la soufflante du groupe motopropulseur M 10 est déterminée à partir d'une ou plusieurs tables enregistrées dans une mémoire accessible depuis le dispositif avionique de contrôle 14. Selon un mode de réalisation, cette table ou ces tables sont mémorisées dans une mémoire non-volatile interne au dispositif avionique de contrôle 14 ou reliée à ce dispositif par exemple au moyen du bus B1. Cette table ou ces tables sont par exemple établies à partir d'essais en vol d'un aéronef similaire à l'aéronef 100.

Lors d'une étape **S3,** le signal I1 issu du groupe motopropulseur 10 est comparé à la valeur seuil déterminée à l'étape S2 de sorte que, si l'angle de calage courant des pales de la soufflante est inférieur à la valeur seuil, un signal de contrôle est envoyé par le dispositif avionique 14, lors d'une étape **S4,** pour configurer en drapeau les pales de la soufflante.

Bien évidemment, lorsque l'angle de calage courant n'est pas inférieur à la valeur seuil, le dispositif avionique de contrôle 14 n'envoie pas un tel signal de contrôle et par conséquent le dispositif de contrôle 12 du groupe motopropulseur 10 continue à contrôler l'angle de calage des pales de la soufflante de façon usuelle et le procédé reboucle à l'étape S1.

Selon un mode de réalisation, le signal de contrôle envoyé par le dispositif avionique de contrôle est adressé au dispositif de contrôle 12 du groupe motopropulseur 10, par exemple sur le bus B2. La mise en drapeau des pales de la soufflante est alors opérée par le dispositif de contrôle 12 du groupe motopropulseur 10, après réception dudit signal de contrôle envoyé par le dispositif avionique 14. Les détails de la mise en drapeau des pales de la soufflante sous contrôle du dispositif de contrôle 12 du groupe motopropulseur 10 ne sont pas développés ici car n'étant pas utiles à la compréhension de l'invention. L'homme du métier saura utiliser des moyens connus de mise en drapeau des pales d'une soufflante.

Selon des variantes de réalisation, le signal de contrôle envoyé par le dispositif avionique 14 lorsque l'angle de calage courant des pales de la soufflante devient inférieur à la valeur seuil déterminée est un ordre de contrôle de nature à interrompre l'alimentation en carburant du groupe motopropulseur 10 ou de nature à couper tout ou partie de l'alimentation électrique du dispositif de contrôle 12 du groupe motopropulseur 10, ce qui a pour effet de provoquer la mise en drapeau des pales de la soufflante. Par exemple, l'ordre de contrôle a pour effet de commander l'ouverture d'un contacteur électrique C monté en série, à bord de l'aéronef 100, sur la ligne d'alimentation électrique LE du dispositif de contrôle 12 du groupe motopropulseur 10. Par exemple encore, l'ordre de contrôle a pour effet de commander la fermeture d'une vanne V montée en série, à bord de l'aéronef 100, sur la ligne d'alimentation en carburant LC du groupe motopropulseur 10.

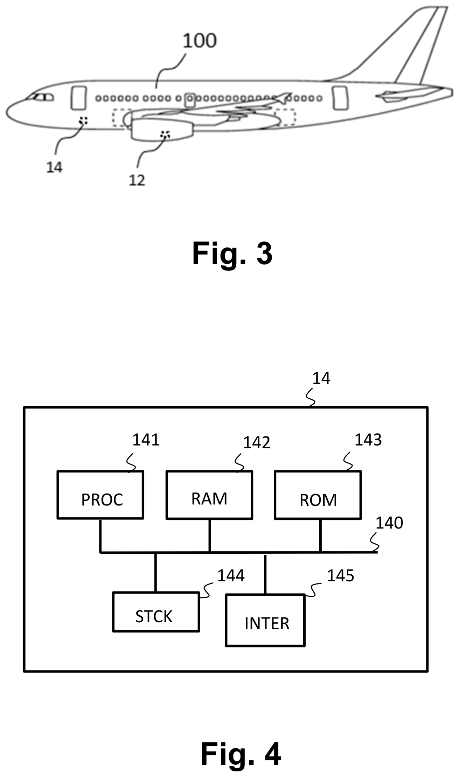

La **figure 3** illustre schématiquement un aéronef 100 comprenant le dispositif avionique 14 qui permet avantageusement de sécuriser les opérations de contrôle d'angle de calage des pales de la soufflante d'un groupe motopropulseur 10 pour éviter toute configuration préjudiciable au vol de l'aéronef 100, par exemple toute configuration de nature à entrainer des conditions aérodynamiques indésirables pour le vol de l'aéronef. Le groupe motopropulseur 10 comprend le dispositif de contrôle 12 du groupe motopropulseur.

Selon un mode de réalisation, le dispositif avionique 14 est configuré pour superviser le contrôle d'angle de calage des pales d'une pluralité de soufflantes de groupes motopropulseurs (donc d'une pluralité de groupes motopropulseurs). Un tel contrôle de plusieurs groupes motopropulseurs peut avantageusement être opéré selon des stratégies prédéterminées. Par exemple, une stratégie prédéterminée est telle qu'il n'est pas possible de configurer en drapeau simultanément toutes les soufflantes des groupes motopropulseurs d'un même aéronef, ce qui revient à dire que l'une d'entre elles, au moins, doit rester opérationnelle avec un angle de calage configuré pour apporter une poussée minimale (angle de calage contrôlé de façon usuelle par le dispositif de contrôle 12 du groupe motopropulseur correspondant à cette soufflante).

La **figure 4** illustre schématiquement un exemple d'architecture interne du dispositif avionique de contrôle 14 d'angle de calage des pales d'une soufflante de l'aéronef 100.

Selon l'exemple d'architecture matérielle représenté à la figure 4, le dispositif avionique de contrôle 14 d'angle de calage comprend alors, reliés par un bus de communication 140 : un processeur ou CPU (« Central Processing Unit » en anglais) 141 ; une mémoire vive RAM (« Random Access Memory » en anglais) 142 ; une mémoire morte ROM (« Read Only Memory » en anglais) 143 ; une unité de stockage telle qu'un disque dur (ou un lecteur de support de stockage, tel qu'un lecteur de cartes SD (« Secure Digital » en anglais) 144 ; un module d'interfaces de puissance et de communication 145 permettant au dispositif avionique de contrôle d'angle de calage 14 de communiquer avec des dispositifs distants, tels que des capteurs, des actionneurs ou des contrôleurs distants (par exemple des vannes hydrauliques ou pneumatiques, contacteurs électriques, etc.), dont en particulier un ou plusieurs dispositifs contrôleurs d'un groupe motopropulseur d'aéronef.

Le processeur 141 du dispositif avionique de contrôle d'angle de calage est capable d'exécuter des instructions chargées dans la RAM 142 à partir de la ROM 143, d'une mémoire externe (non représentée), d'un support de stockage (tel qu'une carte SD), ou d'un réseau de communication. Lorsque le dispositif avionique de contrôle 14 d'angle de calage est mis sous tension, le processeur 141 est capable de lire de la RAM 142 des instructions et de les exécuter. Ces instructions forment un programme d'ordinateur causant la mise en œuvre, par le processeur 141 du dispositif avionique de contrôle d'angle de calage, de tout ou partie d'un procédé de contrôle d'angle de calage des pales d'une soufflante ou d'une hélice, notamment à partir d'informations obtenues et représentatives d'un d'angle de calage courant et de conditions de vol de l'aéronef concerné par rapport à son environnement extérieur.

Tout ou partie d'un tel procédé de contrôle d'angle de calage des pales d'une soufflante ou d'une hélice tel qu'illustré en relation avec la figure 2 peut alors être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif avionique de contrôle d'angle de calage 14 des pales d'une soufflante ou d'une hélice comprend de la circuiterie électronique configurée pour mettre en œuvre un procédé de contrôle d'angle de calage tel que décrit. Bien évidemment, le dispositif avionique de contrôle 14 d'angle de calage des pales d'une soufflante ou d'une hélice comprend en outre ou est couplé à tous les éléments usuellement présents dans un système électronique comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

Le contrôle de l'angle de calage des pales d'une soufflante décrit ci-avant s'applique de la même façon à des pales d'une hélice d'un groupe motopropulseur à hélice d'aéronef, en particulier un turbopropulseur.

## Revendications

1. Procédé de contrôle d'un angle de calage des pales d'une soufflante ou d'une hélice d'un groupe motopropulseur d'un aéronef (100), le procédé étant exécuté dans un dispositif avionique (14) dudit aéronef (100), le dispositif avionique (14) étant embarqué à bord de l'aéronef, indépendant du groupe motopropulseur (10) et relié à un dispositif de contrôle (12) dudit groupe motopropulseur (10) entrainant ladite soufflante, ou ladite hélice, le dispositif de contrôle (12) étant compris dans le groupe motopropulseur (10), le procédé comprenant :
- obtenir (S1) des premières informations représentatives de conditions de vol dudit aéronef par rapport à son environnement extérieur, fournies par au moins un calculateur avionique de l'aéronef indépendant du groupe motopropulseur (10), ces premières informations comprenant au moins une altitude et une vitesse dans l'air de l'aéronef (100),
le procédé étant **caractérisé en ce qu'**il comprend en outre :
- déterminer (S2) une valeur seuil d'angle de calage des pales de ladite soufflante ou hélice, à partir desdites premières informations, de façon à limiter les risques d'effets aérodynamiques indésirables pour le vol de l'aéronef lorsque l'aéronef vole à ladite altitude avec ladite vitesse dans l'air,
- obtenir (S3) une information représentative d'un angle de calage courant des pales de ladite soufflante ou hélice, puis,
- envoyer (S4) un ordre de contrôle dudit groupe motopropulseur lorsque ladite information représentative dudit angle de calage courant est inférieure à ladite valeur seuil, ledit ordre de contrôle visant à opérer une mise en drapeau de ladite soufflante ou hélice dudit groupe motopropulseur de l'aéronef.

2. Procédé de contrôle selon la revendication 1, selon lequel ledit ordre de contrôle dudit groupe motopropulseur est un signal de contrôle envoyé audit dispositif de contrôle (12) du groupe motopropulseur (10), de façon à opérer la mise en drapeau de ladite soufflante ou hélice sous contrôle du dispositif de contrôle (12) du groupe motopropulseur.

3. Procédé de contrôle selon la revendication 1, selon lequel ledit ordre de contrôle dudit groupe motopropulseur est un signal de contrôle de coupure d'alimentation en carburant dudit groupe motopropulseur envoyé pour commander la fermeture d'une vanne (V) montée en série sur une ligne (LC) d'alimentation en carburant dudit groupe motopropulseur (10) ou un signal de contrôle de coupure d'alimentation électrique dudit dispositif de contrôle (12) du groupe motopropulseur envoyé pour commander l'ouverture d'un contacteur électrique (C) monté en série sur une ligne (LE) d'alimentation électrique dudit dispositif de contrôle (12) du groupe motopropulseur.

4. Procédé de contrôle d'un angle de calage des pales d'une soufflante ou d'une hélice selon l'une des revendications 1 à 3, dans lequel le dispositif avionique (14) étant relié à des dispositifs de contrôle (12) d'au moins deux groupes motopropulseurs de l'aéronef, le dispositif avionique (14) est configuré pour superviser le contrôle d'angle de calage des pales de soufflantes ou d'hélices desdits au moins deux groupes motopropulseurs et pour ne pas commander simultanément la mise en drapeau des soufflantes ou des hélices de tous les groupes motopropulseurs (10) de l'aéronef.

5. Dispositif avionique de contrôle (14) d'un angle de calage des pales d'une soufflante ou d'une hélice d'un groupe motopropulseur d'un aéronef (100), ledit dispositif avionique de contrôle (14) étant prévu pour être embarqué à bord de l'aéronef, indépendant du groupe motopropulseur (10) et comprenant de la circuiterie électronique configurée pour :
- obtenir (S1) des premières informations représentatives de conditions de vol dudit aéronef par rapport à son environnement extérieur, fournies par au moins un calculateur avionique de l'aéronef indépendant du groupe motopropulseur (10), ces premières informations comprenant au moins une altitude et une vitesse dans l'air de l'aéronef (100),
ledit dispositif avionique de contrôle (14) étant **caractérisé en ce que** ladite circuiterie électronique est en outre configurée pour :
- déterminer (S2) une valeur seuil d'angle de calage des pales de ladite soufflante ou hélice, à partir desdites premières informations, de façon à limiter les risques d'effets aérodynamiques indésirables pour le vol de l'aéronef lorsque l'aéronef vole à ladite altitude avec ladite vitesse dans l'air,
- obtenir (S3) une information représentative d'un angle de calage courant des pales de ladite soufflante ou hélice, puis,
- envoyer (S4) un ordre de contrôle dudit groupe motopropulseur lorsque ladite information représentative dudit angle de calage courant est inférieure (S3) à ladite valeur seuil, ledit ordre de contrôle visant à opérer une mise en drapeau de ladite soufflante ou hélice dudit groupe motopropulseur de l'aéronef.

6. Dispositif avionique de contrôle (14) selon la revendication 5, dans lequel la circuiterie électronique est en outre configurée pour envoyer ledit ordre de contrôle dudit groupe motopropulseur sous la forme d'un signal de contrôle envoyé à un dispositif de contrôle (12) du groupe motopropulseur (10), compris dans le groupe motopropulseur (10), de façon à opérer la mise en drapeau de ladite soufflante ou hélice dudit groupe motopropulseur d'aéronef sous contrôle du dispositif de contrôle (12) du groupe motopropulseur.

7. Dispositif avionique de contrôle (14) selon la revendication 5, dans lequel la circuiterie électronique est en outre configurée pour envoyer ledit ordre de contrôle dudit groupe motopropulseur sous la forme d'un signal de contrôle de coupure d'alimentation en carburant dudit groupe motopropulseur envoyé pour commander la fermeture d'une vanne (V) montée en série sur une ligne (LC) d'alimentation en carburant dudit groupe motopropulseur ou un signal de coupure d'alimentation électrique dudit dispositif de contrôle (12) du groupe motopropulseur envoyé pour commander l'ouverture d'un contacteur électrique (C) monté en série sur une ligne (LE) d'alimentation électrique dudit dispositif de contrôle (12) du groupe motopropulseur.

8. Dispositif avionique de contrôle (14) d'un angle de calage des pales d'une soufflante ou d'une hélice selon l'une des revendications 5 à 7, dans lequel la circuiterie électronique est configurée pour superviser le contrôle d'angle de calage des pales de soufflantes ou d'hélices d'au moins deux groupes motopropulseurs (10) de l'aéronef et pour ne pas commander simultanément la mise en drapeau des soufflantes ou des hélices de tous les groupes motopropulseurs (10) de l'aéronef (100).

9. Aéronef (100) comprenant un dispositif avionique de contrôle (14) d'un angle de calage selon l'une des revendications 5 à 8.

10. Produit programme d'ordinateur comprenant des instructions de codes de programme pour exécuter les étapes d'un procédé selon l'une des revendications 1 à 4 lorsque ce programme est exécuté par un processeur d'un dispositif avionique.

11. Support de stockage comprenant un produit programme d'ordinateur selon la revendication 10.
